# FASCICULE DE BREVET EUROPEEN

(11) **EP 0 648 572 B1**
(45) Date de publication et mention de la délivrance du brevet: **25.11.1998**
(21) Numéro de dépôt: 94402231.8
(22) Date de dépôt: 05.10.1994
(51) Int. Cl.: B23P 19/00, B25J 17/02

(54) **Dispositif d'insertion d'une pièce cylindrique dans un alésage**
Vorrichtung zum Einsetzen eines zylindrischen Teiles in einer Bohrung
Device for inserting a cylindrical piece in a bore

(30) Priorité: 14.10.1993 FR 9312223
(43) Date de publication de la demande: 19.04.1995
(73) Titulaire: RENAULT AUTOMATION, 92100 Boulogne (FR)
(72) Inventeur: Thurier, Yvan, F-94320 Thiais (FR)
(74) Mandataire: Robert, Jean-Pierre

(56) Documents cités:
- FR-A- 2 506 195
- FR-A- 2 593 109
- US-A- 4 439 926
- US-A- 4 707 907
- US-A- 4 879 796
- US-A- 5 172 922

## Description

La présente invention concerne un dispositif pour mettre en place rapidement une pièce cylindrique dans un alésage comportant les caractéristiques du préambule de la revendication 1, particulièrement adapté aux opérations robotisées d'assemblage.

L'une des difficultés rencontrées dans la mise en place d'une pièce cylindrique dans un alésage par une opération automatique tient au fait que la précision de la position d'un manipulateur de l'une des pièces dans le référentiel de l'autre est souvent inférieure à la tolérance de l'assemblage. En d'autres termes, du fait de cette incertitude, le décalage des axes des deux pièces au moment de l'introduction de l'une dans l'autre est souvent supérieur au jeu séparant leur surface latérale si bien que l'extrémité de la pièce cylindrique bute sur le bord de l'alésage.

Pour pallier cet inconvénient, une solution connue consiste à chanfreiner soit le bord de l'alésage soit le bord de l'extrémité de la pièce cylindrique pour réaliser une surface de guidage sur laquelle les pièces glissent au moment de l'introduction. Cette solution ne peut pas être employée dans les pièces où justement l'existence d'un chanfrein est prohibée.

Il a donc été proposé une autre solution qui consiste à faire vibrer de manière aléatoire autour d'une position moyenne l'une des deux pièces à assembler.

Cette vibration est engendrée lorsque le contact des deux pièces est réalisé et elle cesse lorsqu'il y a coïncidence entre l'axe de la pièce mâle et l'axe de la pièce femelle, l'alignement exact de ces axes étant situé dans le domaine couvert par l'amplitude des vibrations.

La présente invention s'inscrit dans cette dernière famille de solution et propose un dispositif simple de mise en place d'une pièce cylindrique dans un alésage et particulièrement adapté à l'insertion des soupapes dans les guides que portent les culasses.

A cet effet, l'invention a donc pour objet un dispositif d'insertion d'une pièce cylindrique dans un alésage qui comporte un support pour un porte-pièces ayant un axe principal, le porte-pièces comportant des moyens de sa liaison au support glissante dans la direction de l'axe principal et des moyens commandés de maintien de la pièce cylindrique sensiblement coaxialement à l'axe principal du support, le support étant porté par un manipulateur capable de placer son axe principal au voisinage de l'axe de l'alésage tandis que des moyens sont prévus pour engendrer un mouvement vibratoire relatif entre l'alésage et le porte-pièces, les moyens de liaison du porte-pièces au support comportant un joint du type à rotule et les moyens générateurs de vibrations sont constitués par un balourd porté par le porte-pièces et mobiles par rapport à l'axe principal du support dans un plan sensiblement perpendiculaire à ce dernier.

La structure proposée ci-dessus permet d'appliquer la vibration à la pièce mâle de l'assemblage, ce qui jusqu'à présent n'était pas réalisé du fait que la pièce mâle était portée par un manipulateur automatique du type robot et qu'il n'est pas recommandé de soumettre ce robot à des vibrations. L'avantage de cette inversion cinématique par rapport à l'art antérieur tient au fait que les inerties mises en jeu sont beaucoup plus faibles en ce qui concerne la pièce mâle que la pièce femelle. En particulier, lorsqu'il s'agit d'insérer des soupapes dans des culasses, on comprend que l'énergie nécessaire pour engendrer un mouvement vibratoire des culasses est bien supérieure à celle requise pour agiter les queues de soupapes. Il s'ensuit, comme on le verra ci-après, la possibilité de réaliser simplement le générateur de vibrations à l'extrémité même du porte-pièces, son articulation au support constituant un filtre efficace protégeant le robot de ces vibrations.

Dans un mode préféré de réalisation, le balourd est constitué par une bille propulsée le long d'un chemin circulaire situé dans le porte-pièces au voisinage des moyens de maintien de la pièce.

Le support et le porte-pièces comprennent un élément cylindrique creux coiffant à faible jeu un élément cylindrique intérieur, ces éléments étant reliés l'un à l'autre par leur extrémité intérieure au moyen d'un guide axial et d'une articulation à rotule autorisant une translation relative limitée des deux éléments le long de leur axe et une oscillation relative de leurs axes. Comme on le verra ci-après, deux variantes de réalisation sont possibles, l'élément intérieur pouvant constituer soit le support soit le porte-pièces. Cependant, de manière préférée et afin de limiter les masses mises en jeu par la vibration, le support sera constitué par la pièce intérieure.

Comme le dispositif est destiné à être utilisé dans une position verticale ou sensiblement verticale, l'effet de la pesanteur est une force agissant sur le porte-pièce non négligeable en intensité par rapport aux forces mises en jeu lors de l'insertion. Pour réduire l'influence de l'effet de la pesanteur, le dispositif comporte entre les deux éléments au moins un élément intermédiaire déformable exerçant entre ceux-ci une force d'équilibrage partiel de l'effet de la gravité.

Enfin, dans l'optique constante de réduire les masses du dispositif d'insertion mobile avec le manipulateur, ce dispositif comporte un moyen de mise en dépression du volume de l'alésage, au moins à partir du moment où l'insertion est réalisée.

D'autres caractéristiques et avantages de plusieurs exemples de réalisation de l'invention ressortiront de la description donnée ci-après.

Il sera fait référence aux dessins annexés dans lesquels :
- les figures 1 et 2 sont deux schémas simplifiés du dispositif réalisant l'invention,
- la figure 3 est une vue en coupe longitudinale d'un mode préféré de réalisation du dispositif de l'invention,
- la figure 4 est une coupe selon la ligne IV-IV de la figure 3,
- la figure 5 est une vue partielle en coupe d'une variante de réalisation de la figure 3.

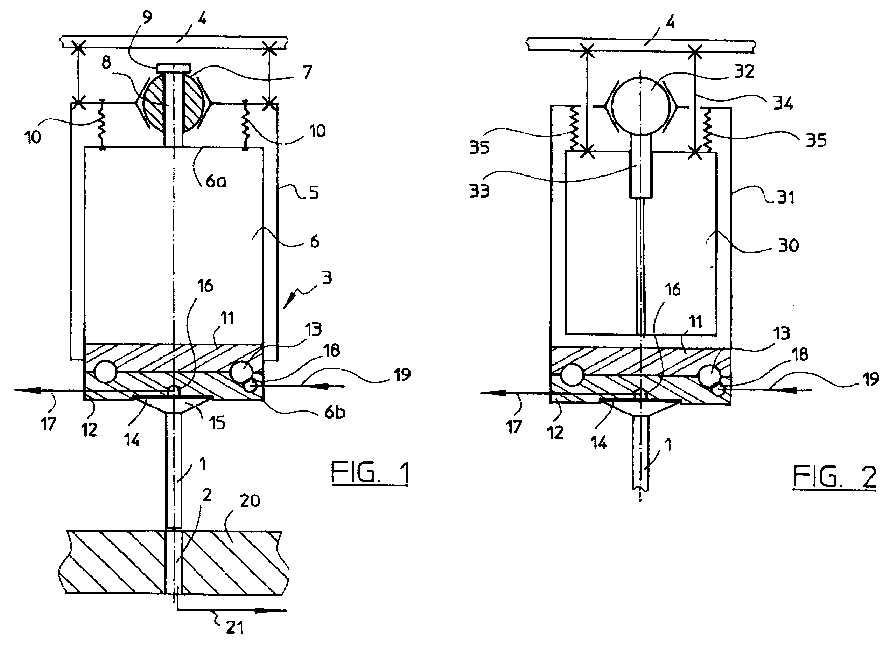

Sur ces figures, le corps cylindrique 1 à insérer dans un alésage 2 est ici une queue de soupape. Le dispositif d'insertion 3 de la figure 1 est porté par une platine supérieure 4 solidaire d'un manipulateur non représenté tel par exemple qu'un poignet de robot. L'insertion est ici réalisée verticalement, c'est pourquoi le dispositif 3 est situé sous la platine 4. Ce dispositif d'insertion comporte un support 5 en forme de corps cylindrique tubulaire lié rigidement à la platine 4 pour un porte-pièces 6 situé à l'intérieur de ce support tubulaire et sensiblement coaxial à ce dernier au repos. Le porte-pièces 6 cylindrique est relié au support 5 par son extrémité 6a située à l'intérieur de ce support, au moyen d'une articulation à rotule schématisée par une sphère 7 montée tournante dans un palier du support 5, cette sphère constituant un guide pour une tige 8 solidaire du support 6 qui peut donc coulisser dans une direction sensiblement axiale dans l'articulation à rotule 7. Le corps intérieur 6 est suspendu au support 5 par une butée 9 que porte la tige 8 et qui repose sur la sphère 7 sous l'effet de la gravité. Des ressorts 10 s'étendent entre l'extrémité 6a du porte-pièces 6 et le fond du support tubulaire 5 pour prendre en charge une partie du poids du porte-pièces 6.

A son autre extrémité, celle 6b faisant saillie à l'extérieur du support tubulaire 5, le porte-pièces 6 comporte deux plaques 11 et 12 assemblées l'une à l'autre par une surface de contact radial pour définir au niveau de leur plan de joint un canal torique 13 dans lequel est placée une bille non visible sur la figure. En outre, la plaque 12 d'extrémité comporte un lamage central 14 dans lequel peut être insérée une tête de soupape 15.

Au centre du lamage 14 un canal 16 est relié à une source d'aspiration non représentée par une conduite schématisée par la flèche 17 de manière que lorsque l'aspiration est mise en service et qu'une tête de soupape est présente dans le lamage, une force de maintien de la soupape au porte-pièces est développée. En outre, un canal de soufflage 18 connecté par un conduit 19 à une source d'air comprimé débouche dans le chemin de roulement 13 de la bille, tangentiellement, afin d'y créer un flux d'entraînement de cette bille.

L'alésage 2 est porté par une pièce 20, par exemple une culasse qui, dans le poste d'assemblage où l'on procède à l'insertion de la soupape dans l'alésage 2, est fixe. La position de l'axe de l'alésage 2 est repérée dans le référentiel de ce poste avec une certaine incertitude connue. Le robot porteur de la platine 4 évolue dans ce référentiel entre un emplacement où il vient prendre en charge une soupape 15 et à l'emplacement où se situe l'alésage 2. Les tolérances propres du robot, la précision de ses mouvements, les tolérances de fabrication du dispositif d'insertion et de l'alésage font que quand le robot est considéré comme étant à l'aplomb de l'alésage 2 par l'automate qui le pilote, l'axe de cet alésage et l'axe de la tige 1 de soupape sont rarement en coïncidence. On peut même dire que dans la plupart des cas, le décalage entre ces deux axes est supérieur au jeu de l'ajustement entre la tige 1 et l'alésage 2. Une tentative d'insertion pure et simple par descente de la platine 4 en direction de la pièce 20 aboutirait à un blocage, l'extrémité de la tige 1 venant buter sur les bords de l'alésage 2. C'est pourquoi on commande par l'automate la mise en vibration du dispositif d'insertion dès que les pièces 1 et 20 sont au contact l'une de l'autre. Cette vibration est engendrée par l'envoi d'un courant d'air comprimé dans le canal 13 qui propulse la bille contenue dans ce canal à grande vitesse en faisant osciller l'axe du porte-pièces par rapport à l'axe du support grâce à la rotule 7.

Lorsque l'on a porté les pièces 1 et 20 au contact l'une de l'autre, le porte-pièces 6 a pénétré plus profondément à l'intérieur du support 5 si bien que, lorsque l'axe de la queue de soupape et l'axe de l'alésage 2 seront en coïncidence au hasard des mouvements relatifs de l'un par rapport à l'autre du fait des vibrations du porte-pièces, la tige 1 pénétrera légèrement dans l'alésage 2 sous l'effet de la pesanteur appliquée au porte-pièces 6. On aura noté que ce mouvement vertical relatif du porte-pièces par rapport au support est possible grâce au coulissement de la tige 8 dans la rotule 7.

Il faut également noter que lorsque les pièces 1 et 20 sont au contact l'une de l'autre, la force de contact n'est pas égale au poids du porte-pièces augmenté de celui de la soupape mais à ce poids auquel est soustrait l'effort d'allégement dû aux ressorts 10. On peut ainsi, en réglant l'effort de ces ressorts 10, ajuster la force de contact entre les pièces 1 et 20 à une valeur qui n'engendre qu'un faible frottement entre celles-ci lors des mouvements vibratoires du porte-pièces. On comprend en effet que si l'effort de frottement était trop important, il ne pourrait pas y avoir de mouvement relatif entre les deux pièces au niveau de leur contact et la vibration qui s'applique sur la soupape au niveau de sa tête 15 n'engendrerait des mouvements que de cette tête alors que l'extrémité de la tige 1 resterait fixe par rapport à l'alésage 2.

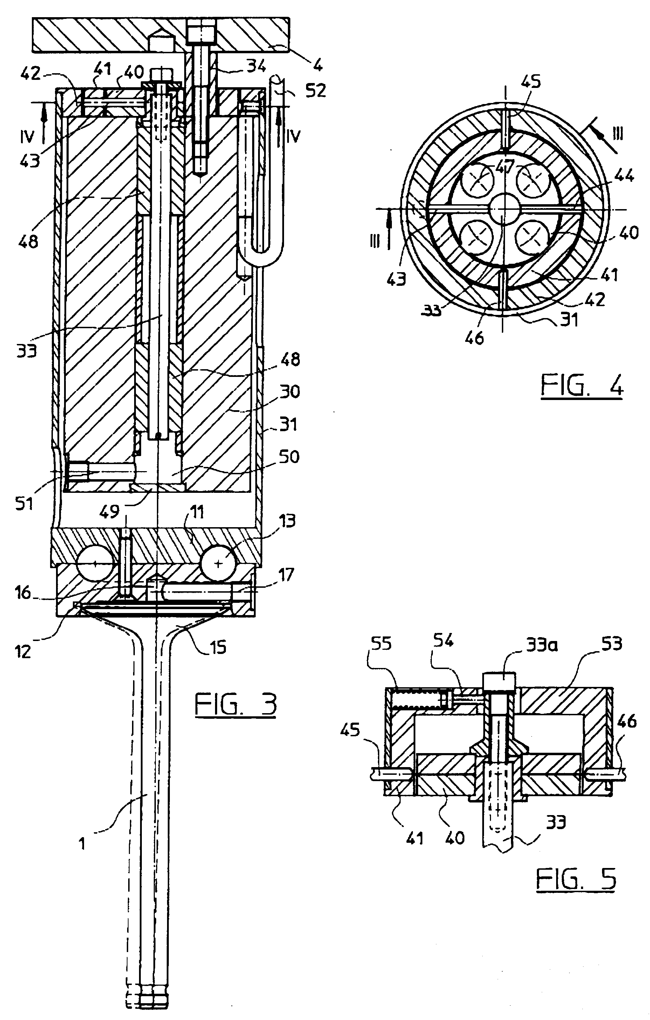

Comme on le verra dans la description du mode de réalisation de la figure 3, un capteur disposé entre le support et le porte-pièces permet de délivrer une information lorsque l'insertion est amorcée, en direction de l'automate de commande du dispositif, cet automate coupant l'introduction du flux gazeux à l'intérieur du canal 13, coupant en même temps l'aspiration de la tête de soupape 15 dans l'alésage 14 et commandant une aspiration 21 dans l'alésage 2 pour augmenter la vitesse d'insertion.

A la figure 2 on a représenté schématiquement un second mode de réalisation du dispositif d'insertion selon l'invention dans lequel il y a une inversion cinématique par rapport à la figure 1 entre le support et le porte-pièces. En effet on remarquera que le support est ici constitué par un noyau central cylindrique 30 solidaire de la platine 4 du robot alors que le porte-pièces équipé de ses plaques 11 et 12 est en forme de chemise tubulaire 31 dans laquelle le noyau 30 est logé. La partie supérieure de cette chemise est articulée par une articulation à rotule représentée par une sphère 32 à une tige 33 qui est montée à coulissement vertical à l'intérieur du noyau support 30. La fixation du noyau support à la platine est réalisée par des tirants 34 qui traversent avec jeu la paroi supérieure de la chemise tubulaire 31.

Des ressorts 35 sont interposés entre le porte-pièces 31 et le noyau support 30 pour, comme les ressorts 10 de la figure précédente, diminuer l'effort de contact entre les deux pièces à insérer l'une dans l'autre. On notera que les ressorts 35 sont ici des ressorts de compression contrairement aux ressorts 10 de la figure précédente qui étaient des ressorts de traction. Le fonctionnement de ce dispositif est identique à celui décrit en regard de la figure 1. L'amplitude des vibrations est déterminée par le jeu existant entre le support et le porte-pièces, c'est-à-dire pour cette figure entre la chemise 31 et l'extrémité inférieure du noyau porte-pièces 30 de la même manière que dans la figure précédente entre le support tubulaire 5 et le porte-pièces central 6 au niveau de la partie inférieure du support tubulaire.

La figure 3 et la figure 4 sont deux vues en coupe orthogonales d'une réalisation industrielle du dispositif conforme à la figure 2. Certains des éléments déjà décrits portent sur ces figures les mêmes références. La figure 3 qui est une coupe longitudinale selon la ligne brisée III-III de la figure 4, on remarquera que l'articulation à rotule entre la tige 33 et le porte-pièces tubulaire extérieur 31 est réalisée au moyen de trois anneaux concentriques 40, 41, 42. L'anneau central 40 est fixé à la tige 33 par son centre. L'anneau intermédiaire 41 dont le diamètre intérieur est légèrement supérieur au diamètre extérieur de l'anneau 40 est articulé à cet anneau 40 autour d'un axe diamétral matérialisé par deux arbres d'articulation 43, 44. L'anneau extérieur 42 est quant à lui solidaire de la chemise tubulaire du porte-pièces 31, possède un diamètre intérieur supérieur au diamètre extérieur de l'anneau intermédiaire 41 et est articulé à ce dernier autour d'un axe diamétral perpendiculaire à l'axe diamétral des arbres 43 et 44, l'articulation étant réalisée par deux arbres 45 et 46. Le système à cardan ainsi réalisé est tout à fait équivalent à la rotule symbolisée par la sphère 32 de la figure 2.

On notera que les quatre tirants 34 de fixation du noyau 30 à la platine 4 du robot passent librement au travers d'orifices 47 de l'anneau central 40 dont le mouvement est une translation simple puisqu'il est solidaire de la tige 33 montée glissante dans le noyau 30.

L'alésage du noyau 30 qui reçoit la tige 33 est équipé de coussinets à billes 48. A la partie inférieure du noyau 30 cet alésage est fermé par une plaque 49 et il est ainsi déterminé une chambre 50 dans laquelle pénètre l'extrémité de la tige 33. Cette chambre est sensiblement étanche du fait même de la construction des butées à billes 48 et peut être alimentée en gaz comprimé au moyen d'un conduit 51. On ajustera la pression du gaz introduit dans la chambre 50 pour que la force qu'il exerce à l'extrémité de la tige 33 qui y pénètre équilibre partiellement l'effet de la pesanteur sur le porte-pièces 31 et la soupape 15.1 qui y est fixée. Cette chambre 50 pneumatique a donc pour fonction la fonction des ressorts 35 de la figure 2. On notera également dans ce mode de réalisation, la présence d'un conducteur 52 qui symbolise la liaison entre un capteur du déplacement relatif de la chemise 31 et du noyau 30, ce capteur n'étant pas représenté, avec l'automate de commande du cycle d'insertion, pour que cet automate possède une information relative à cette position relative, donc à l'existence ou non d'un début d'insertion.

Sur la figure 5 enfin, on a représenté partiellement une variante de réalisation des figures 3 et 4 dans laquelle l'anneau intermédiaire 41 est en fait constitué par l'extrémité de la paroi latérale d'une coupelle cylindrique 53 dont le fond surmonte l'anneau intérieur 40 pour encercler la partie terminale 33a de la tige 33 afin de pouvoir constituer un support pour une butée élastique 54 opposant une résistance radiale orientée aux mouvements de l'anneau 41 par rapport à l'anneau 40. En effet, la butée élastique 54 est située dans le même plan radial que l'axe d'articulation de l'anneau 41 à l'anneau extérieur 42. Cette disposition présente un intérêt lorsque l'on veut réaliser une insertion le long d'une direction qui ne soit pas strictement verticale. En effet, dans l'exemple d'insertion des soupapes dans le guide de culasse, la direction d'insertion est de l'ordre de 15 à 20° par rapport à la verticale si l'on veut conserver à la culasse une orientation semblable entre sa manutention et le poste d'insertion. Cette conservation d'orientation présente en effet l'avantage de simplifier la structure du poste d'insertion pour ce qui concerne la partie recevant la culasse car il n'est plus nécessaire de prévoir des tables inclinables pour s'adapter à une direction d'insertion verticale.

Ainsi, par exemple, si la direction d'insertion est une direction inclinée par rapport à l'axe vertical dans le plan contenant les arbres d'articulation 45, 46 de l'anneau 41 par rapport à l'anneau extérieure 42, c'est-à-dire dans le plan de la figure 5, on inclinera la platine 4 du robot en conséquence. Dans ce mouvement, l'ensemble constitué par la pièce, le porte-pièces 31, l'anneau 42 et l'anneau 41 c'est-à-dire la coupelle 53, va pivoter par rapport au support 30 solidaire de la platine 4 autour de l'axe des arbres d'articulation 43, 44 de l'anneau central à l'anneau intermédiaire (axe perpendiculaire au plan de la figure 5) sous l'effet de la pesanteur. La butée élastique 54 avec le ressort approprié 55 derrière, qui la pousse contre l'extrémité 33a de la tige créera un couple de rappel venant compenser l'effet de la pesanteur et conserver la coaxialité du porte-pièces 31 et du support 30. Cette butée doit être effectivement élastique pour pouvoir absorber les variations de mouvements dues aux vibrations engendrées lors de l'insertion.

## Revendications

1. Dispositif d'insertion (3) d'une pièce cylindrique (1) dans un alésage (2) comportant un support (5, 30) pour un porte-pièces (6, 31) ayant un axe principal, le porte-pièces (6, 31) comportant des moyens (8, 33) de sa liaison glissante dans la direction de l'axe principal avec le support et des moyens (14, 16, 17) de maintien commandés de la pièce cylindrique (1) sensiblement coaxialement à l'axe principal du support (5, 30), le support étant porté par un manipulateur (4) capable de placer son axe principal à proximité de l'axe de l'alésage (2) tandis que des moyens sont prévus pour engendrer un mouvement vibratoire relatif entre l'alésage (2) et le porte-pièces (6, 31), caractérisé en ce que les moyens de liaison du porte-pièces (6, 31) au support (5, 30) comportent un joint (7, 32) du type à rotule et en ce que les moyens générateurs de vibrations sont constitués par un balourd porté par le porte-pièces (6, 31) et mobiles par rapport à l'axe principal du support (5, 30) dans un plan sensiblement perpendiculaire à ce dernier.

2. Dispositif selon la revendication 1, caractérisé en ce que le balourd est constitué par une bille propulsée le long d'un chemin (13) circulaire situé dans le porte-pièces (6, 31) au voisinage des moyens (14, 16, 17) de maintien de la pièce.

3. Dispositif selon la revendication 1 ou la revendication 2, caractérisé en ce que le support et le porte-pièces comprennent un élément cylindrique (5, 31) coiffant à jeu déterminé un élément cylindrique (6, 30) reliés l'un à l'autre par leur extrémité intérieure au moyen d'un guide axial (8, 33) et d'une articulation à rotule (7, 32) autorisant une translation relative limitée des deux éléments le long de leurs axes et une oscillation relative limitée de leurs axes.

4. Dispositif selon la revendication 3, caractérisé en ce qu'il comporte entre les deux éléments (6, 5 ; 30, 31) au moins un élément intermédiaire (10, 35, 50) exerçant entre les deux éléments cylindriques une force d'équilibrage partiel de l'effet de la gravité.

5. Dispositif selon l'une des revendications 2 à 4 caractérisé en ce que la bille est propulsée le long du chemin (13) par des moyens pneumatiques (18, 19).

6. Dispositif selon l'une des revendications précédentes caractérisé en ce que les moyens de maintien de la pièce comportent une buse (16) d'aspiration d'une surface de la pièce contre une surface (14) correspondante du porte-pièces (6, 31).

7. Dispositif selon l'une des revendications précédentes caractérisé en ce que le support comporte un noyau cylindrique (30) fixe équipé en partie supérieure de moyens (34) pour sa fixation au manipulateur (4) et pourvu le long de son axe d'un alésage de guidage pour une tige (33) d'attelage du porte-pièces au support, ce porte-pièces comportant une chemise (31) entourant le support et équipée à son extrémité inférieure des moyens de maintien (14, 16, 17) de la pièce et du balourd tandis que son extrémité supérieure est attelée à la tige (33) au moyen d'un jeu de trois anneaux concentriques (40, 41, 42) dans lequel l'anneau intermédiaire (41) est articulé à l'anneau extérieur (42) solidaire de la chemise (31) par un premier axe diamétral (45, 46) et à l'anneau central (40) solidaire de la tige (33) par un second axe diamétral (43, 44) perpendiculaire au premier, l'anneau central (40) étant traversé par les moyens (34) de fixation du support (30) au manipulateur (4).

8. Dispositif selon la revendication 7, caractérisé en ce que la tige (33) et l'alésage du noyau (30) déterminent à l'extrémité de la tige opposée à celle attelée à la chemise (31), une chambre (50) sensiblement étanche qui comporte un orifice (51) pour sa connexion à une source de gaz comprimé.

9. Dispositif selon la revendication 7 ou la revendication 8, caractérisé en ce qu'au moins l'une des articulations (43, 44) de l'anneau intermédiaire (41) aux anneaux périphériques (40, 42) comporte un frein élastique (54) exerçant un couple de rappel entre le support (30) et le porte-pièces (31).

10. Dispositif selon la revendication 9, caractérisé en ce que ce frein (54) est constitué par un moyen de butée élastique porté par l'anneau intermédiaire (41) et prenant appui contre la tige (33) à l'extérieur de la chemise dans une direction parallèle à l'un (45, 46) des axes d'articulation de cet anneau intermédiaire (41).

11. Dispositif selon l'une des revendications précédentes, caractérisé en ce qu'il comporte un moyen (21) de mise en dépression du volume de l'alésage (2) destiné à recevoir la pièce cylindrique (1), au moins à partir du moment ou l'insertion est amorcée.

## Claims

1. A device (3) for inserting a cylindrical part (1) into a bore (2), the device comprising a support (5, 30) for a part-carrier (6, 31) having a main axis, the part-carrier (6, 31) having means (8, 33) for slidably connecting it along the direction of the main axis with the support, and controlled means (14, 16, 17) for holding the cylindrical part (1) substantially on the main axis of the support (5, 30), the support being carried by a manipulator (4) capable of placing its main axis in the vicinity of the axis of the bore (2) while means are provided for generating relative vibratory motion between the bore (2) and the part-carrier (6, 31), the device being characterized in that the means linking the part-carrier (6, 31) to the support (5, 30) include a ball type joint (7, 32), and in that the vibration generating means are constituted by an out-of-balance mass carried by the part-carrier (6, 31) and movable relative to the main axis of the support (5, 30) in a plane that is substantially perpendicular thereto.

2. A device according to claim 1, characterized in that the out-of-balance mass is constituted by a ball propelled along a circular path (13) situated in the part-carrier (6, 31) in the vicinity of the means (14, 16, 17) for holding the part.

3. A device according to claim 1 or claim 2, characterized in that the support and the part-carrier comprise a cylindrical element (5, 31) covering with determined clearance a cylindrical element (6, 30), said elements being connected to each other at their inside ends by means of an axial guide (8, 33) and a ball joint (7, 32) allowing limited relative translation between the two elements along their axes and limited relative oscillation of their axes.

4. A device according to claim 3, characterized in that between the two elements (6, 5; 30, 31) it includes at least one intermediate element (10, 35, 50) exerting between the two cylindrical elements a force that partially balances the effect of gravity.

5. A device according to any one of claims 2 to 4, characterized in that the ball is propelled along the path (13) by pneumatic means (18, 19).

6. A device according to any preceding claim, characterized in that the means for holding the part comprise a suction nozzle (16) for sucking a surface of the part against a corresponding surface (14) of the part-carrier (6, 31).

7. A device according to any preceding claim, characterized in that the support includes a fixed cylindrical core (30) fitted at its top end with means (34) for fixing it to the manipulator (4) and provided along its axis with a guide bore for a coupling rod (33) of the part-carrier of the support, said part-carrier including a jacket (31) surrounding the support and fitted at its bottom end with the means (14, 16, 17) for holding the part, and the out-of-balance mass, while its top end is coupled to the rod (33) by means of a set of three concentric rings (40, 41, 42) in which the intermediate ring (41) is hinged to the outer ring (42) secured to the jacket (31) about a first diametral axis (45, 46) and to the central ring (40) secured to the rod (33) about a second diametral axis (43, 44) perpendicular to the first, the central ring (40) having the means (34) for fixing the support (30) to the manipulator (4) passing therethrough.

8. A device according to claim 7, characterized in that the rod (33) and the bore of the core (30) define, at the end of the rod remote from its end coupled to the jacket (31) a substantially sealed chamber (50) which includes an orifice (51) for connection to a source of compressed gas.

9. A device according to claim 7 or 8, characterized in that at least one of the hinges (43, 44) between the intermediate ring (41) and the peripheral rings (40, 42) includes a resilient brake (54) exerting a return torque between the support (30) and the part-carrier (31).

10. A device according to claim 9, characterized in that the brake (54) is constituted by resilient abutment means carried by the intermediate ring (41) and bearing against the rod (33) outside the jacket in a direction parallel to one of the hinge axes (45, 46) of said intermediate ring (41).

11. A device according to any preceding claim, characterized in that it includes means (21) for establishing suction in the volume of the bore (2) that is to receive the cylindrical part (1), at least from the moment that insertion has started.

## Patentansprüche

1. Vorrichtung (3) zum Einsetzen eines zylindrischen Teiles (1) in eine Bohrung (2) mit einem eine Hauptachse aufweisenden Träger (5, 30) für einen Teilehalter (6, 31), der Mittel (8, 33) für seine eine Gleitbewegung in Richtung der Hauptachse ermöglichende Verbindung mit dem Träger und steuerbare Haltemittel (14, 16, 17) zum Halten des zylindrischen Teiles (1) im wesentlichen koaxial zur Hauptachse des Trägers (5, 30) hat und wobei der Träger von einem Manipulator (4) gehalten ist, der seine Hauptachse in die Nähe der Achse der Bohrung (2) bringen kann, während Mittel vorgesehen sind, um eine relative Vibrationsbewegung zwischen der Bohrung (2) und dem Teilehalter (6, 31) zu erzeugen, dadurch **gekennzeichnet**, daß die Mittel zum Verbinden des Teilehalters (6, 31) mit dem Träger (5, 30) ein Gelenk (7, 32) nach Art eines Universalgelenkes umfaßt und daß die Mittel zum Erzeugen von Vibrationen von einer an dem Teilehalter (6, 31) angeordneten Unwucht gebildet und relativ zur Hauptachse des Trägers (5, 30) in einer im wesentlichen senkrecht zu letzterer gerichteten Ebene beweglich sind.

2. Vorrichtung nach Anspruch 1, dadurch **gekennzeichnet**, daß die Unwucht von einer Kugel gebildet ist, die entlang einer kreisförmigen Bahn (13) angetrieben wird, welche in dem Teileträger (6, 31) nahe den Haltemitteln (14, 16, 17) zum Halten des Teiles gelegen ist.

3. Vorrichtung nach Anspruch 1 oder 2, dadurch **gekennzeichnet**, daß der Träger und der Teilehalter ein zylindrisches Element (5, 31) umfassen, das mit einem bestimmten Spiel ein zylindrisches Element (6, 30) überdeckt, wobei die beiden Elemente an ihrem inneren Ende mittels einer axialen Führung (8, 33) und eines Kugelgelenkes (7, 32) verbunden sind, was eine begrenzte relative Translationsbewegung der beiden Elemente entlang ihren Achsen und eine begrenztere relative Ozillationsbewegung ihrer Achsen erlaubt.

4. Vorrichtung nach Anspruch 3, dadurch **gekennzeichnet**, daß sie zwischen den beiden Elementen (6, 5; 30, 31) mindestens ein Zwischenelement (10, 35, 50) hat, das zwischen den beiden zylindrischen Elementen eine Kraft zum teilweisen Ausgleichen der Schwerkraftwirkung ausübt.

5. Vorrichtung nach einem der Ansprüche 2 bis 4, dadurch **gekennzeichnet**, daß die Kugel entlang der Bahn (13) durch pneumatische Mittel (18, 19) angetrieben wird.

6. Vorrichtung nach einem der vorangegangenen Ansprüche, dadurch **gekennzeichnet**, daß die Haltemittel zum Halten des Teiles eine Saugdüse (16) zum Ansaugen einer Fläche des Teiles gegen eine entsprechende Fläche (14) des Teilehalters (6, 31) hat.

7. Vorrichtung nach einem der vorangegangenen Ansprüche, dadurch **gekennzeichnet**, daß der Träger einen feststehenden zylindrischen Kern (30) hat, der an seinem oberen Abschnitt mit Mitteln (34) zu seiner Befestigung am Manipulator (4) ausgestattet ist und entlang seiner Achse mit einer Führungsbohrung für eine Stange (33) zur Verbindung des Teilehalters mit dem Träger versehen ist, wobei der Teilehalter eine den Träger umgebende Hülse (31) umfaßt und an seinem unteren Ende mit Haltemitteln (14, 16, 17) zum Halten des Teiles und der Unwucht versehen ist, während sein oberes Ende mit der Stange (33) über einen Satz von drei konzentrischen Ringen (40, 41, 42) verbunden ist, unter denen der mittlere Ring (41) an dem mit der Hülse (31) festverbundenen äußeren Ring (42) über eine erste diametral gerichtete Achse (45, 46) und an dem mit der Stange (33) festverbundenen zentralen Ring (40) über eine zweite diametral gerichtete und zur ersten Achse senkrechte Achse verbunden ist und wobei der zentrale Ring (40) von den Befestigungsmitteln (34) zur Befestigung des Trägers (30) an dem Manipulator (4) durchsetzt wird.

8. Vorrichtung nach Anspruch 7, dadurch **gekennzeichnet**, daß die Stange (33) und die Bohrung des Kernes (30) an dem Ende der Stange, das dem mit der Hülse (31) verbundenen Ende entgegengesetzt ist, eine im wesentlichen dichte Kammer (50) begrenzen, die eine Öffnung (51) für ihre Verbindung mit einer Druckgasquelle hat.

9. Vorrichtung nach Anspruch 7 oder 8, dadurch **gekennzeichnet**, daß mindestens eine der Gelenkverbindungen (43, 44) des mittleren Ringes (41) mit den Randringen (40, 42) eine elastische Bremse (54) hat, die ein Rückstellmoment zwischen dem Träger (30) und dem Teilerhalter (31) ausübt.

10. Vorrichtung nach Anspruch 9, dadurch **gekennzeichnet**, daß diese Bremse (54) von einem elastischen Anschlagmittel gebildet ist, das an dem mittleren Ring (41) angeordnet ist und gegen die Stange (33) außerhalb der Hülse in einer Richtung anliegt, die parallel zu einer der Gelenkachsen (45, 46) dieses mittleren Ringes (41) ist.

11. Vorrichtung nach einem der vorangegangenen Ansprüche, dadurch **gekennzeichnet**, daß sie ein Mittel (21) zum Erzeugen eines Unterdruckes in dem Volumen der Bohrung (2) hat, die zur Aufnahme des zylindrischen Teils (1) bestimmt ist, zumindest von dem Moment an, wo das Einsetzen beginnt.
